Europäisches Patentamt

European Patent Office

Office européen des brevets

(11) Veröffentlichungsnummer: **0 004 003**
**A2**

# EUROPÄISCHE PATENTANMELDUNG

(21) Anmeldenummer: 79100534.1

(22) Anmeldetag: 23.02.79

(51) Int. Cl.²: **H 04 B 5/00**

(30) Priorität: 11.03.78 DE 2810691

(43) Veröffentlichungstag der Anmeldung:
19.09.79 Patentblatt 79/19

(84) Benannte Vertragsstaaten:
CH FR GB IT

(71) Anmelder: Licentia Patent-Verwaltungs-GmbH
Theodor-Stern-Kai 1
D-6000 Frankfurt/Main 70(DE)

(72) Erfinder: Schwab, Hans, Dipl.-Ing.
Schellingstrasse 32
D-7440 Nürtingen(DE)

(54) Nachrichtenübertragungssystem.

(57) Bei einem Nachrichtenübertragungssystem, das für den Funkkontakt in gegen Funkwellen abgeschatteten Bereichen ein passives Leckkabel-Antennensystem enthält, in das bzw. aus dem nachrichtentragende elektromagnetische Felder ein- bzw. auskoppelbar sind, ist kein funkkontakt möglich, wenn sich ein Teilnehmer in einem gegen Funkwellen abgeschatteten Bereich, der andere Teilnehmer dagegen in einem gegen Funkwellen nicht abgeschatteten Bereich befindet. Erfindungsgemäß wird das passive Leckkabel-Antennensystem (1) an zumindest eine Außenantenne angeschlossen, die an einer gegen Funkwellen nicht abgeschatteten Stelle angeordnet ist (2, 2'). Bei einem vornehmlich für die linienförmige Funkversorgung von Eisenbahnstrecken ausgelegten System ist die Außenantenne (2, 2') als Richtantenne ausgebildet.

./.

Licentia Patent-Verwaltungs-GmbH
6000 Frankfurt (Main) 70

Ulm, 10.03.78
NE2-UL/Dr.Gk/hä
UL 77/136

"Nachrichtenübertragungssystem"

Die Erfindung betrifft ein Nachrichtenübertragungssystem, das für den Funkkontakt in gegen Funkwellen abgeschatteten Bereichen ein passives Leckkabel-Antennensystem enthält, in das bzw. aus dem nachrichtentragende elektromagnetische Felder mittels beweglicher und/oder ortsfester Antennen ein- bzw. auskoppelbar sind.

Insbesondere bei Bahnen findet man eine linienförmige Funkversorgung unter Verwendung von Leck- bzw. Schlitzkabeln in Bereichen wie z. B. Unterführungen, Geländeeinschnitten und Tunnels, die normalerweise sende- und empfangsseitig gegen Funkkontakte abgeschattet sind. Bei diesen Einrichtungen handelt es sich allerdings um aktive Sende/Empfangssysteme, deren Hauptnachteil darin besteht, daß ihre aktiven Elemente einer Stromversorgung und einer Wartung bedürfen, was aufgrund von Unzulänglichkeiten des Aufstellungsortes oft mit erheblichen Schwierigkeiten und Kosten verbunden ist.

...

Aus der Literaturstelle QUARTERLY REPORTS, Vol. 13, No. 1, 1972, Seiten 57 und 58 ist es bereits bekannt, für den Funkkontakt zwischen dem vorderen und dem hinteren Ende eines Eisenbahnzuges in einem Tunnel, in dem ja Funkwellen normalerweise nicht ausbreitungsfähig sind, ein passives Leckkabel-Antennensystem vorzusehen, in das die die Nachrichten tragenden elektromagnetischen Felder mittels für den Freiluft-Funkverkehr am Zug vorn und hinten ohnehin angebrachter Antennen sendeseitig ein- und empfangsseitig auskoppelbar sind. Diese bekannte Anordnung weist noch den Nachteil auf, daß bei ihr eine Funkverbindung zwischen den beiden Enden des Zuges beim Einfahren in und beim Ausfahren aus dem Tunnel, d. h. wenn sich das eine Zugende im Tunnel, das andere Ende aber außerhalb des Tunnels befindet, nicht möglich ist. Besonders schwerwiegend ist dieser Nachteil beispielsweise bei Rangierfahrten. Rangierfahrten im Bahnhofsbereich müssen unter ständigem Funkkontakt zwischen Rangierer und Triebwagenführer ausgeführt werden. Fährt die Lokomotive im Schiebebetrieb, so steht der Rangierer im Wagen am Kopfende des Zuges und beobachtet durch die geöffnete Verbindungstür den Schienenbetrieb. Die Lokomotive ist mit einer mobilen Funkanlage ausgerüstet, der Rangierer mit einem tragbaren Funkgerät, mit dessen Hilfe er dem Triebwagenführer seine Anweisungen übermittelt. Nun liegt bei manchen Bahnhöfen (z. B. in Stuttgart) ein Teil der Strecke in Tunnels. Beim Einfahren in und beim Ausfahren aus einem Tunnel ist der Funkkontakt zwischen Rangierer und Triebwagenführer unterbrochen. Im Falle eines Falles hat der Rangierer dann nur die Möglichkeit einer manuellen Notbremsung.

Der Erfindung liegt die Aufgabe zugrunde, das Nachrichtenübertragungssystem der eingangs genannten Art dahingehend zu verbessern, daß es einen Funkkontakt auch dann ermöglicht, wenn sich einer der Teilnehmer in einem gegen Funkwellen abgeschatteten Bereich, der andere Teilnehmer dagegen in einem gegen Funkwellen nicht abgeschatteten Bereich befindet.

...

Die Fig. zeigt im Schnitt einen Tunnel, in dem ein Leckkabel-Antennensystem 1 installiert ist, das an seinen Enden jeweils an eine außerhalb des Tunnels angebrachte Außenantenne 2 und 2' angeschlossen ist. Das Leckkabel-Antennensystem 1 in Verbindung mit den Außenantennen 2 und 2' ermöglicht einen ständigen Funkkontakt zwischen beiden Zugenden auch dann, wenn sich - wie in der Fig. dargestellt - ein Teil des Zuges im Tunnel, der andere Teil des Zuges dagegen außerhalb des Tunnels befindet. Der Lokomotivführer kann damit jederzeit aus der Lokomotive außerhalb des Tunnels per Funk einen mit einem tragbaren Sende/Empfangsgerät ausgerüsteten Beamten im letzten Wagon im Tunnel erreichen. Umgekehrt kann der Beamte aus dem Tunnel jederzeit mit dem Lokomotivführer außerhalb des Tunnels Funkkontakt aufnehmen. Entsprechendes gilt natürlich auch für den Fall, daß sich die Lokomotive im Tunnel und der letzte Wagon außerhalb des Tunnels befinden. Der wesentlichste Vorteil der Erfindung ist darin zu sehen, daß sie einen lückenlosen Funkkontakt auch zwischen gegen Funkwellen abgeschatteten und nichtabgeschatteten Bereichen ermöglicht. Des weiteren benötigt das passive Antennensystem keine elektronischen Bauteile und damit auch keine Stromversorgung und Wartung. Es ist ähnlich einer Wasserleitung einfach zu installieren. Ferner ist es geschlossen, dauerhaft, platzsparend und kostengünstig. Das System erhöht die Sicherheit und Zuverlässigkeit von Funknetzen, wobei nur darauf zu achten ist, daß die Summe aus Koppeldämpfung zwischen Außenantenne und Antenne der Lokomotive, Längsdämpfung des Leckkabel-Antennensystems und Koppeldämpfung zwischen Leckkabel-Antennensystem und Antenne im oder am Wagon bzw. die Summe aus Koppeldämpfung zwischen Außenantenne und Antenne im oder am Wagon, Längsdämpfung im Leckkabel-Antennensystem und Koppeldämpfung zwischen Leckkabel-Antennensystem und Antenne der Lokomotive kleiner ist als die Differenz zwischen Senderleistung und der für die Verständlichkeit noch erforderlichen Empfangsleistung.

...

Diese Aufgabe wird erfindungsgemäß dadurch gelöst, daß das passive Leckkabel-Antennensystem an zumindest eine Außenantenne angeschlossen ist, die an einer gegen Funkwellen nicht abgeschatteten Stelle angeordnet ist.

Bei einer vornehmlich für die linienförmige Funkversorgung von Eisenbahnstrecken bevorzugten Ausgestaltungsform ist vorgesehen, daß die Außenantenne/Außenantennen als Richtantenne/Richtantennen, vorzugsweise als Helixantenne/Helixantennen, ausgebildet ist/sind.

Eine zweckmäßige Ausführungsform besteht darin, daß die Außenantenne/Außenantennen von dem passiven Leckkabel-Antennensystem räumlich abgesetzt angeordnet und mit diesem über eine Antennenleitung verbunden ist/sind.

Eine Erweiterung der Anordnung ist dadurch möglich, daß das Leckkabel-Antennensystem aus einem verzweigten Leckkabel besteht.

Eine vorteilhafte Weiterbildungsform für manche Anwendungsfälle ist dadurch gegeben, daß die Außenantenne/Außenantennen aus einem oder mehreren Antennenfeldern besteht/bestehen.

Die Systemdämpfung des Übertragungssystems bestehend aus der Dämpfung im Leckkabel-Antennensystem einschließlich Außenantenne sowie der Kopplungsdämpfung zum Sender und zum Empfänger ist kleiner als die Leistungsreserve zwischen Sender und Empfänger.

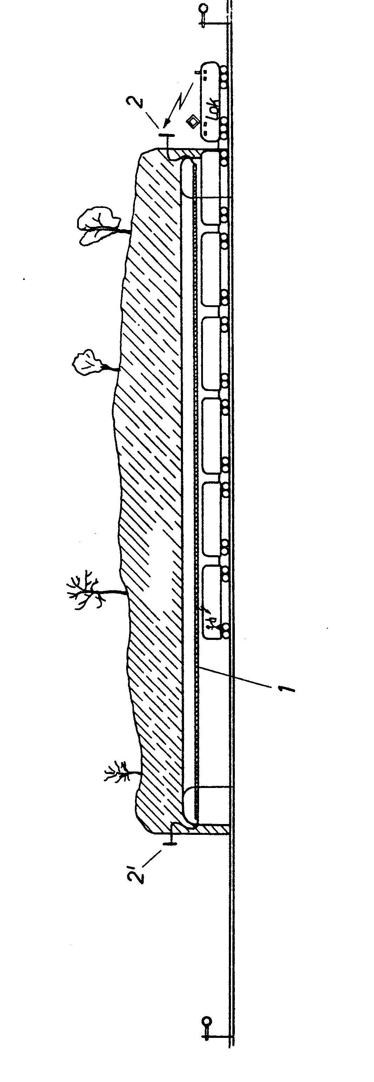

Ein vorteilhaftes Ausführungsbeispiel der Erfindung ist in der Zeichnung dargestellt und wird im folgenden näher erläutert.

Es sei noch darauf hingewiesen, daß hier unter den Begriff "Leckkabel" auch Schlitzkabel zu verstehen sind und daß sich die Erfindung selbstverständlich nicht auf den hier nur beispielshalber näher erläuterten Fall der Anwendung in Verbindung mit Eisenbahnanlagen beschränkt, vielmehr erstreckt sich die Erfindung ganz allgemein auf alle Anwendungsfälle, bei denen zwischen Teilnehmern innerhalb eines gegen Funkwellen abgeschatteten Bereichs oder zwischen Teilnehmern in- und außerhalb eines solchen Bereichs Funkkontakte ermöglicht werden.

Licentia Patent-Verwaltungs-GmbH          Ulm, 10.03.78
6000 Frankfurt (Main) 70                  NE2-UL/Dr.Gk/hä
Theodor-Stern-Kai 1                       UL 77/136


P a t e n t a n s p r ü c h e

1. Nachrichtenübertragungssystem, das für den Funkkontakt in gegen Funkwellen abgeschatteten Bereichen ein passives Leckkabel-Antennensystem enthält, in das bzw. aus dem nachrichtentragende elektromagnetische Felder mittels beweglicher und/oder ortsfester Antennen ein- bzw. auskoppelbar sind, dadurch gekennzeichnet, daß das passive Leckkabel-Antennensystem (1) an zumindest eine Außenantenne (2, 2') angeschlossen ist, die an einer gegen Funkwellen nicht abgeschatteten Stelle angeordnet ist (Fig.).

2. Nachrichtenübertragungssystem nach Anspruch 1, dadurch gekennzeichnet, daß die Außenantenne/Außenantennen (2, 2') als Richtantenne/Richtantennen, vorzugsweise als Helixantenne/Helixantennen, ausgebildet ist/sind.

3. Nachrichtenübertragungssystem nach Anspruch 1 oder 2, dadurch gekennzeichnet, daß die Außenantenne/Außenantennen (2, 2') von dem passiven Leckkabel-Antennensystem (1) räumlich abgesetzt angeordnet und mit diesem über eine Antennenleitung verbunden ist/sind.

...

UL 77/136

4. Nachrichtenübertragungssystem nach einem der Ansprüche 1 bis 3, dadurch gekennzeichnet, daß das Leckkabel-Antennensystem (1) aus einem verzweigten Leckkabel besteht.

5. Nachrichtenübertragungssystem nach einem der Ansprüche 1 bis 4, dadurch gekennzeichnet, daß die Außenantenne/ Außenantennen (2, 2') aus einem oder mehreren Antennenfeldern besteht/bestehen.

6. Nachrichtenübertragungssystem nach einem der Ansprüche 1 bis 5, dadurch gekennzeichnet, daß die Systemdämpfung bestehend aus der Dämpfung im Leckkabel-Antennensystem (1) einschließlich Außenantenne (2, 2') sowie der Kopplungsdämpfung zum Sender und zum Empfänger kleiner ist als die Leistungsreserve zwischen Sender und Empfänger.

...

1/1